# EUROPÄISCHE PATENTSCHRIFT

(11) **EP 0 691 932 B1**
(45) Veröffentlichungstag und Bekanntmachung des Hinweises auf die Patenterteilung: **07.05.1997**
(21) Anmeldenummer: 95908897.2
(22) Anmeldetag: 02.02.1995
(51) Int. Cl.: B67C 3/20, G01F 11/28

(54) **VERFAHREN ZUM ABFÜLLEN EINES FLÜSSIGKEITSVOLUMENS IN GEFÄSSE**
PROCESS FOR FILLING CONTAINERS WITH A CERTAIN VOLUME OF LIQUID
PROCEDE DE REMPLISSAGE DE RECIPIENTS AVEC UN VOLUME DONNE DE LIQUIDE

(30) Priorität: 08.02.1994 DE 4403824
(43) Veröffentlichungstag der Anmeldung: 17.01.1996
(73) Patentinhaber: KRONES AG HERMANN KRONSEDER MASCHINENFABRIK, D-93073 Neutraubling (DE)
(72) Erfinder: HÄRING, Franz, D-93073 Neutraubling (DE); BRÄUNLING, Hans-Ulrich, D-93152 Nittendorf (DE); ALTWECK, Willibald, D-93073 Neutraubling (DE)
(74) Vertreter: Grünecker, Kinkeldey, Stockmair & Schwanhäusser Anwaltssozietät
(86) Internationale Anmeldenummer: EP9500377
(87) Internationale Veröffentlichungsnummer: WO9521789

(56) Entgegenhaltungen:
- EP-A- 0 075 492
- EP-A- 0 106 971
- DE-U- 9 113 294
- US-A- 5 184 753

## Beschreibung

Die Erfindung betrifft ein Verfahren zum Abfüllen eines Flüssigkeitsvolumens in Gefäße gemäß dem Oberbegriff des Anspruchs 1.

Ein derartiges Verfahren ist durch die US-A-5 184 753 bekannt. Hierbei ergibt sich aufgrund der systembedingten Verzögerungszeiten zwischen dem Erreichen des vorgegebenen oberen und unteren Schaltpegels und dem endgültigen Schließen des Einlaßventils bzw. Auslaßventils ein unkontrollierter Nachlauf, der zu einer Vergrößerung des durch die Höhendifferenz zwischen den beiden Schaltpegeln und dem Querschnitt der Dosierkammer definierten Flüssigkeitsvolumens führt. Besonders ungünstig ist, daß sich die Fehler im Bereich des oberen und des unteren Schaltpegels addieren und die Fehler im Bereich des oberen Schaltpegels außerdem durch Druckschwankungen in der Flüssigkeitszuleitung beeinflußt werden. Dieses bekannte Verfahren ist daher zum exakten Füllen, insbesondere von relativ kleinen Gefäßen wie Getränkedosen oder Getränkeflaschen, nicht geeignet.

Zwar ist beim bekannten Verfahren eine Korrekturmöglichkeit vorgesehen, es wird jedoch lediglich die Temperatur der Flüssigkeit in der Dosierkammer berücksichtigt. Entsprechend der gemessenen Temperatur wird der Querschnitt der Dosierkammer durch das Ein- oder Ausfahren von Verdrängungskörpern vergrößert oder verkleinert, wodurch das gewünschte Gewicht der abzufüllenden Flüssigkeitsmenge konstant gehalten werden kann.

Der Erfindung liegt die Aufgabe zugrunde, bei einem Verfahren der eingangs genannten Art mit einfachen Mitteln die Füllgenauigkeit hinsichtlich des Volumens wesentlich zu verbessern.

Diese Aufgabe wird erfindungsgemäß durch die im Kennzeichen des Anspruchs 1 angegebenen Merkmale gelöst.

Bei einem erfindungsgemäßen Verfahren wird die Einhaltung des gewünschten Flüssigkeitsvolumens unabhängig von den Strömungs- und Druckverhältnissen im Flüssigkeitszulauf, den systembedingten Verzögerungszeiten usw. wesentlich verbessert. Es können somit auch relativ kleine Gefäße mit einem Füllvolumen von beispielsweise 0,33 Litern exakt und mit hoher Geschwindigkeit gefüllt werden.

Vorteilhafte Weiterbildungen der Erfindung sind in den Unteransprüchen enthalten.

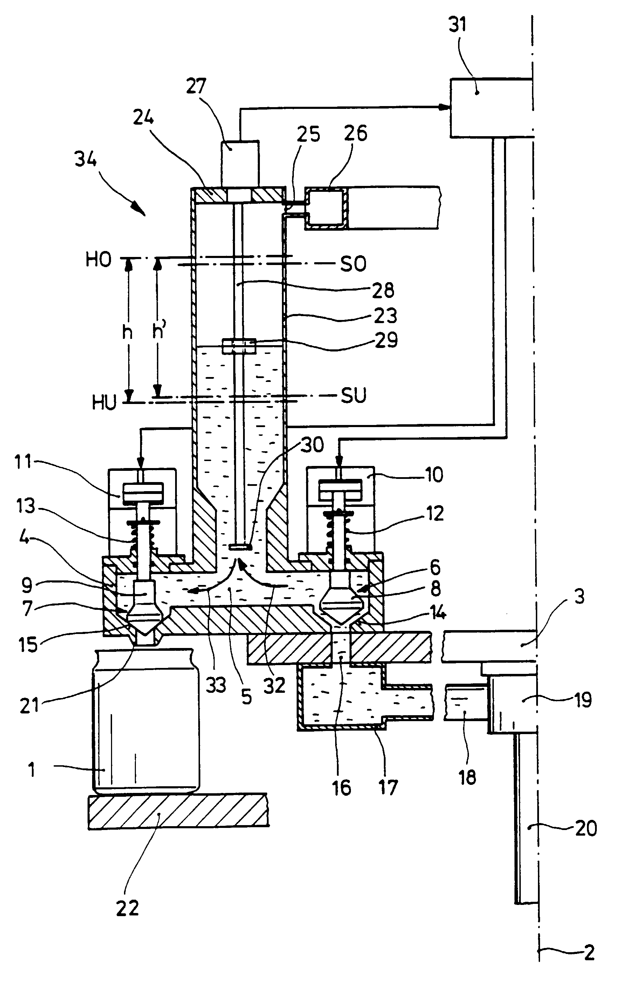

Im Nachstehenden wird ein Ausführungsbeispiel der Erfindung anhand der Zeichnung beschrieben. Diese zeigt einen senkrechten Schnitt durch eine Vorrichtung zum portionsweisen Abfüllen einer Flüssigkeit wie z.B. eines Getränks in Dosen 1 unter atmosphärischem Druck. Die Vorrichtung weist einen um eine senkrechte Drehachse 2 umlaufenden Rotor 3 in Form einer Kreisscheibe oder eines Kreisrings auf. Am Umfang des Rotors 3 sind gleichmäßig verteilt mehrere gleichartige Füllorgane 34 mit je einem Ventilblock 4 und einem im wesentlichen radial zur Drehachse 2 verlaufenden Hohlraum 5 befestigt. An dessen innerem Ende ist ein Einlaßventil 6 und an dessen äußerem Ende ist ein Auslaßventil 7 vorgesehen. Die beiden Ventile 6, 7 weisen jeweils einen höhenbeweglichen Ventilkörper 8, 9 auf, der durch ein eigenes Stellorgan 10, 11 in Form eines Pneumatikzylinders entgegen der Kraft von Druckfedern 12, 13 abgesenkt werden kann. Die Ventilkörper 8, 9 wirken mit sich nach unten hin konisch verjügenden Ventilsitzen 14, 15 im Ventilblock 4 zusammen und sind nach oben hin abgedichtet aus diesem herausgeführt.

An den Ventilsitz 14 des Einlaßventils 6 schließt sich ein kurzer Kanal 16 an, der in einen ringförmigen Vorratsbehälter 17 für die abzufüllende Flüssigkeit einmündet. Dieser ist an der Unterseite des Rotors 3 befestigt und wird über mehrere radiale Leitungen 18, einen konzentrisch zur Drehachse 2 liegenden Drehverteiler 19 und eine Steigleitung 20 mit der Flüssigkeit versorgt. Die Zufuhr der Flüssigkeit erfolgt mit ausreichendem Überdruck entweder über eine nicht gezeigte Pumpe mit einer Druckregelung oder über einen höher als das Füllorgan 34 angeordneten, gleichfalls nicht gezeigten Vorlaufbehälter.

An den Ventilsitz 15 des Auslaßventils 7 schließt sich ein Auslaufstutzen 21 in Form eines kurzen rohrartigen Ansatzes an der Unterseite des Ventilblocks 4 an. Der Auslaufstutzen 21 endet mit Abstand über dem oberen Rand einer zu füllenden Dose 1, so daß diese ungehindert einem zusammen mit dem Rotor 3 um die Drehachse 2 umlaufenden Drehtisch 22 zugeführt und nach dem Füllen wieder von diesem abgeführt werden kann. Die Zu- und Abfuhr der Dosen 1 erfolgt beispielsweise durch nicht gezeigte Transportsterne mit einem dazwischenliegenden Führungsbogen.

Mittig zwischen den beiden Stellorganen 10, 11 ist an der Oberseite des Ventilblocks 4 eine zylindrische Dosierkammer 23 mit senkrechter Mittelachse angeordnet. Diese mündet mit ihrer unteren, verjüngten Öffnung direkt in den Hohlraum 5 ein und zwar im Bereich zwischen dem Einlaßventil 6 und dem Auslaßventil 7. Die Dosierkammer 23 besteht im wesentlichen aus einem Rohrstück mit kalibrierter Bohrung und ist an der Oberseite durch einen Deckel 24 verschlossen. Dicht unterhalb des Deckels 24 ist in der Dosierkammer 23 eine seitliche Öffnung 25 ausgebildet, die mit einem Ringkanal 26 verbunden ist. Durch die Öffnung 25 und den Ringkanal 26 erfolgt der Gasaustausch beim Füllen und Entleeren der Dosierkammer 23, wozu der Ringkanal 26 mit der Atmosphäre verbunden ist.

Im Deckel 24 ist eine Füllstandssonde 27 befestigt, welche die gesamte Höhe der Dosierkammer 23 bestreicht. Die Füllstandssonde 27 besitzt einen geradlinigen, kreisrunden Stab 28, der mittig in der Dosierkammer 23 sitzt. Auf dem Stab 28 ist ein ringförmiger Schwimmer 29 frei höhenbeweglich geführt. Dessen untere Endstellung wird durch einen scheibenförmigen Anschlag 30 definiert, der am unteren Ende des Stabes 28 befestigt ist. Die Höhenposition des Schwimmers 29 bezüglich des Stabes 28 wird z.B. durch einen induktiven Wegaufnehmer im Inneren des Stabes 28 oder mit Hilfe von im Stab 28 erzeugten Schallschwingungen, die vom Schwimmer 29 reflektiert werden, erfaßt. Geeignet ist jedes Meßverfahren, mit dem die Position des Schwimmers 29 und damit die Füllhöhe in der Dosierkammer 23 mit einer ausreichenden Genauigkeit, vorzugsweise im Bereich von Bruchteilen eines Millimeters, gemessen werden kann. Die Füllstandssonde 27 liefert ein entsprechendes Meßsignal, z.B. in Form einer elektrischen Spannung, an eine angeschlossene elektronische Steuereinrichtung 31. Diese nimmt das Meßsignal kontinuierlich oder in ausreichend kurzen Zeitabständen diskontinuierlich auf und ist während eines Füllvorgangs jederzeit über die momentane Füllhöhe in der Dosierkammer 23 informiert. Die Steuereinrichtung 31 arbeitet mit einem oder mehreren Mikroprozessoren und steuert das Einlaßventil 6 und das Auslaßventil 7 durch entsprechende Be- oder Entlüftung der Stellorgane 10, 11 unter Zwischenschaltung nicht gezeigter Magnetventile.

Das mit der vorbeschriebenen Vorrichtung durchführbare Verfahren läuft unter der Regie der Steuereinrichtung 31 folgendermaßen ab: In der Ausgangsphase sind die beiden Ventile 6, 7 geschlossen und der Hohlraum 5 und der untere Bereich der Dosierkammer 23 sind entweder mit der Flüssigkeit gefüllt, wenn vorher bereits ein Füllvorgang stattgefunden hat, oder sind vollständig leer, wenn vorher kein Füllvorgang stattgefunden hat. Als erstes wird nun bei weiterhin geschlossenem Auslaßventil 7 das Einlaßventil 6 geöffnet und die Flüssigkeit strömt aus dem Vorratsbehälter 17 über das Einlaßventil 6 und den Hohlraum 5 in Richtung des Pfeiles 32 von unten her in die Dosierkammer 23 ein. Diese Phase ist in der Zeichnung dargestellt. Dabei wird der Schwimmer 29 durch die Flüssigkeit entsprechend angehoben und die Füllhöhe in der Dosierkammer 23 durch die Füllstandssonde 27 überwacht.

Sobald der Flüssigkeitsspiegel einen vorgegebenen oberen Schaltpegel SO erreicht, wird ein Schließen des Einlaßventils 6 durch Druckluftzufuhr zum Stellmotor 10 veranlaßt. Aufgrund von elektrisch und pneumatisch bedingten Verzögerungszeiten läuft noch etwas Flüssigkeit nach, bis das Einlaßventil 6 endgültig geschlossen ist. Es stellt sich eine tatsächliche obere Füllhöhe HO ein, die neben den Verzögerungszeiten auch von den Strömungs- und Druckverhältnissen, insbesondere im Vorratsbehälter 17, abhängig ist, und daher von Füllvorgang zu Füllvorgang verschieden sein kann. Die tatsächliche obere Füllhöhe HO wird von der Füllstandssonde 27 registriert und von der Steuereinrichtung 31 aufgenommen. Diese bestimmt nun einen unteren Schaltpegel SU, dessen Lage in einer ersten Verfahrensvariante von der tatsächlichen oberen Füllhöhe HO, vom gewünschten Abfüllvolumen V und vom freien Querschnitt der Dosierkammer 23 abhängig ist. Durch Division des Volumens V durch den Querschnitt wird die Höhe h' berechnet, um welche der untere Schaltpegel SU tiefer liegt als die tatsächliche obere Füllhöhe HO.

Zwischenzeitlich ist eine leere Dose 1 auf dem Drehtisch 22 unter dem betreffenden Füllorgan 34 plaziert worden und es wird jetzt bei geschlossen bleibendem Einlaßventil 6 das Auslaßventil 7 geöffnet. Die Flüssigkeit fließt in Richtung des Pfeiles 33 nach unten hin aus der Dosierkammer 23 über den Hohlraum 5, das Auslaßventil 7 und den Auslaufstutzen 21 in die Dose 1 ein. Dabei sinkt der Schwimmer 29 entsprechend ab und die Füllstandssonde 27 überwacht wiederum die momentane Füllhöhe in der Dosierkammer 23.

Sobald der Flüssigkeitsspiegel den vorgegebenen unteren Schaltpegel SU erreicht, wird durch Druckluftzufuhr zum Stellmotor 11 das Auslaßventil 7 geschlossen. Damit ist der Füllvorgang abgeschlossen und ein bestimmtes Volumen V der Flüssigkeit ist in die Dose 1 eingelaufen. Etwa vorhandene, pneumatisch oder elektrisch bedingte Verzögerungen zwischen dem Erreichen des unteren Schaltpegels SU und dem endgültigen Schließen des Auslaßventils 7 werden bei der vorbeschriebenen ersten Variante des Füllverfahrens nicht automatisch berücksichtigt. Der hierdurch evtl. bedingte Nachlauf ist zum einen aufgrund des geringen statischen Drucks und der entsprechend geringen Auslaufgeschwindigkeit relativ klein und zum anderen praktisch konstant.

Es ist jedoch möglich, durch manuelle Eingabe eines Korrekturfaktors in die Steuereinrichtung 31 den unteren Schaltpegel SU gegenüber dem theoretischen Wert, wie er durch den Querschnitt der Dosierkammer 23 und dem gewünschten Volumen V definiert ist, geringfügig höher zu legen, und so einen evtl. Nachlauf zu berücksichtigen.

Bei einer zweiten Variante des erfindungsgemäßen Verfahrens läuft das Füllen der Dosierkammer 23 zunächst in gleicher Weise ab, wie bei der vorstehend beschriebenen ersten Variante. Auch wird bei Erreichen eines vorgegebenen unteren Schaltpegels SU das Schließen des Auslaßventils 7 ausgelöst. Im Anschluß daran wird jedoch die sich nach dem vollständigen Schließen des Auslaßventils 9 in der Dosierkammer 23 tatsächlich einstellende untere Füllhöhe HU durch die Füllstandssonde 27 gemessen und an die Steuereinrichtung 31 gemeldet. Diese errechnet nun das tatsächlich abgefüllte Volumen V aus der Höhendifferenz h zwischen den tatsächlich gemessenen Werten für die obere Füllhöhe HO und die untere Füllhöhe HU. Ist das tatsächliche Füllvolumen V größer als der gewünschte theoretische Wert, so wird beim nächstfolgenden Füllvorgang im gleichen Füllorgan 34 die Höhe h' etwas verringert und dadurch im Normalfall der untere Füllstand SU etwas angehoben. Dies kann entweder in adaptiver Weise durch stufenförmiges Anheben von Füllvorgang zu Füllvorgang erfolgen, bis das gewünschte theoretische Füllvolumen V erreicht ist, oder es wird die erforderliche Korrektur des unteren Schaltpegels SU aus dem Höhenunterschied zwischen dem unteren Schaltpegel SU und der tatsächlich gemessenen unteren Füllhöhe HU definiert. In entsprechend umgekehrter Weise wird die Höhendifferenz h' vergrößert und damit der untere Schaltpegel SU abgesenkt, wenn das tatsächlich abgefüllte Volumen V kleiner ist als das theoretische Volumen.

Die obere Füllhöhe HO wird bei jedem Füllvorgang neu gemessen, um evtl. Druckschwankungen im Vorratsbehälter 17 zu kompensieren. Dementsprechend wird dann bei jedem Füllvorgang der vorgegebene untere Schaltpegel SU neu definiert. Auch die untere Füllhöhe HU kann bei jedem Füllvorgang neu gemessen werden. Da die Strömungsverhältnisse innerhalb des Füllorgans 34 jedoch weitgehend konstant sind, ist auch ein Messen in bestimmten Zeitabständen bzw. nach einer bestimmten Anzahl von Füllvorgängen möglich.

Der obere Schaltpegel SO bleibt im normalen Füllbetrieb unverändert. Er bestimmt über die statische Höhe die Füllgeschwindigkeit. Beim Umstellen auf eine andere Dosengröße oder eine andere Flüssigkeit kann auch der obere Schaltpegel SO verändert werden und/oder das Volumen V. Der untere Schaltpegel SU wird dann durch die Steuereinrichtung automatisch angepaßt.

## Patentansprüche

1. Verfahren zum Abfüllen eines Flüssigkeitsvolumens in Gefäße (1), wobei die Flüssigkeit durch Öffnen eines Einlaßventils (6) bei geschlossenem Auslaßventil (7) in eine volumetrische Dosierkammer (23) eingelassen, bei Erreichen eines oberen Schaltpegels (50) in der Dosierkammer das Schließen des Einlaßventils eingeleitet, die Flüssigkeit durch Öffnen des Auslaßventils bei geschlossenem Einlaßventil aus der Dosierkammer in ein Gefäß ausgelassen und bei Erreichen eines unteren Schaltpegels (SU) in der Dosierkammer das Schließen des Auslaßventils eingeleitet wird, dadurch gekennzeichnet, daß die nach dem Schließen des Einlaßventils (6) und/oder Auslaßventils (7) sich tatsächlich einstellende obere Füllhöhe (HO) und/oder untere Füllhöhe (HU) in der Dosierkammer (23) gemessen und der so gewonnene Wert zur Korrektur bzw. Festlegung des oberen Schaltpegels (SO) und/oder unteren Schaltpegels (SU) beim aktuellen und/oder nachfolgenden Füllvorgang herangezogen wird.

2. Verfahren nach Anspruch 1, dadurch gekennzeichnet, daß die nach dem Schließen des Einlaßventils (6) sich tatsächlich einstellende obere Füllhöhe (HO) in der Dosierkammer gemessen und zur Festlegung des unteren Schaltpegels (SU) beim gleichen Füllvorgang herangezogen wird.

3. Verfahren nach Anspruch 1 oder 2, dadurch gekennzeichnet, daß die nach dem Schließen des Auslaßventils (7) sich tatsächlich einstellende untere Füllhöhe (HU) in der Dosierkammer (23) gemessen und zur Festlegung des unteren Schaltpegels (SU) bei einem nachfolgenden Füllvorgang herangezogen wird.

4. Verfahren nach Anspruch 3, dadurch gekennzeichnet, daß der Wert für den unteren Schaltpegel (SU) adaptiv verändert wird.

5. Verfahren nach Anspruch 3, dadurch gekennzeichnet, daß der Wert für den unteren Schaltpegel (SU) aus der gemessenen tatsächlichen oberen Füllhöhe (HO) des aktuellen Füllvorgangs, der gemessenen unteren Füllhöhe (HU) mindestens eines vorangegangenen Füllvorgangs, dem gewünschten Füllvolumen (V) und dem freien Querschnitt der Dosierkammer (23) definiert wird.

## Claims

1. A method for filling a liquid volume into receptacles (1), the liquid being admitted into a volumetric metering chamber (23) by opening an inlet valve (6) in the closed state of an outlet valve (7), closing of said inlet valve being started when an upper switching level (SO) is reached in said metering chamber, the liquid being discharged from said metering chamber into a receptacle by opening said outlet valve in the closed state of said inlet valve, and closing of said outlet valve being started when a lower switching level (SU) is reached in said metering chamber, characterized in that the upper filling level (HO) and/or lower filling level (HU) actually obtained after closing of said inlet valve (6) and/or said outlet valve (7) is measured in said metering chamber (23), and the resultant value is used for correcting or defining the upper switching level (SO) and/or lower switching level (SU) during the current and/or subsequent filling operation.

2. A method according to claim 1, characterized in that said upper filling level (HO) actually obtained after closing of said inlet valve (6) is measured in said metering chamber and used for defining said lower switching level (SU) during the same filling operation.

3. Method according to claim 1 or 2, characterized in that said lower filling level (HU) actually obtained after closing of said outlet valve (7) is measured in said metering chamber (23) and used for defining the lower switching level (SU) in a subsequent filling operation.

4. Method according to claim 3, characterized in that the value for said lower switching level (SU) is adaptively changed.

5. Method according to claim 3, characterized in that the value for said lower switching level (SU) is defined on the basis of the actual upper filling level (HO) of the current filling operation as measured, the lower filling level (HU) of at least one preceding filling operation as measured, the desired filling volume (V) and the free cross-section of said metering chamber (23).

## Revendications

1. Procédé de remplissage de récipients (1) avec un volume donné de liquide, dans lequel le liquide est admis par l'intermédiaire de l'ouverture d'une soupape d'admission (6) avec la soupape de sortie (7) en position fermée dans une chambre de dosage (23) volumétrique, la fermeture de la soupape d'admission est déclenchée lorsque le niveau de commande supérieur (SO) est atteint dans la chambre de dosage, le liquide est évacué de la chambre de dosage dans un récipient par l'ouverture de la soupape de sortie, la soupape d'admission étant en position fermée et la fermeture de la soupape de sortie est déclenchée lorsqu'un niveau inférieur de commande (SU) est atteint dans la chambre de dosage, caractérisé en ce que le niveau de remplissage supérieur (HO) et/ou le niveau de remplissage inférieur (HU) qui apparaît effectivement dans la chambre de dosage (23) après la fermeture de la soupape d'admission (6) et/ou la soupape de sortie (7) est mesuré et la valeur ainsi obtenue est prise en compte pour la correction ou la détermination du niveau de commande supérieur (SO) et/ou du niveau de commande inférieur (SU) lors de l'opération de remplissage actuelle et/ou suivante.

2. Procédé selon la revendication 1, caractérisé en ce que le niveau de remplissage supérieur (HO) qui apparaît effectivement dans la chambre de dosage après la fermeture de la soupape d'admission (6) est mesuré et utilisé pour la détermination du niveau de commande inférieur (SU) lors de la même opération de remplissage.

3. Procédé selon la revendication 1 ou 2, caractérisé en ce que le niveau de remplissage inférieur (HU) qui apparaît effectivement dans la chambre de dosage (23) après la fermeture de la soupape de sortie (7) est mesuré et utilisé pour la détermination du niveau de commande inférieur (SU) lors d'une opération de remplissage ultérieure.

4. Procédé selon la revendication 3, caractérisé en ce que la valeur pour le niveau de commande inférieur (SU) est modifiée de façon adaptative.

5. Procédé selon la revendication 3, caractérisé en ce que la valeur pour le niveau de commande inférieur (SU) est définie à partir du niveau de remplissage supérieur (HO) mesuré effectif de l'opération de remplissage actuelle, du niveau de remplissage inférieur (HU) mesuré d'au moins une opération de remplissage précédente, du volume de remplissage souhaité (V) et de la coupe transversale libre de la chambre de dosage (23).
